# EUROPÄISCHE PATENTSCHRIFT

(11) **EP 4 399 035 B1**
(45) Veröffentlichungstag und Bekanntmachung des Hinweises auf die Patenterteilung: **04.12.2024**
(21) Anmeldenummer: 23754160.2
(22) Anmeldetag: 02.08.2023
(51) Int. Cl.: B07C 5/34

(54) **SORTIERVERFAHREN UND VERFAHREN ZUM RECYCLING VON FEUERFESTEN GEFORMTEN ERZEUGNISSEN, VORZUGSWEISE VON STEINEN, SOWIE DEREN VERWENDUNG**
SORTING METHOD AND METHOD FOR RECYCLING REFRACTORY SHAPED PRODUCTS, PREFERABLY STONES, AND THEIR USE
PROCÉDÉ DE TRI ET PROCÉDÉ DE RECYCLAGE DE PRODUITS FAÇONNÉS RÉFRACTAIRES, DE PRÉFÉRENCE DES PIERRES, ET LEUR UTILISATION

(30) Priorität: 10.08.2022 DE 102022120180
(43) Veröffentlichungstag der Anmeldung: 17.07.2024
(73) Patentinhaber: Refratechnik Holding GmbH, 80807 München (DE)
(72) Erfinder: STEIN, Petra, 80807 München (DE); KLISCHAT, Hans-Jürgen, 80807 München (DE); SCHEMMEL, Thomas, 80807 München (DE); GAEBEL, Rainer, 80807 München (DE)
(74) Vertreter: Dr. Solf & Zapf Patent- und Rechtsanwalts PartG mbB
(86) Internationale Anmeldenummer: PCT/EP2023/071408
(87) Internationale Veröffentlichungsnummer: WO 2024/033183

(56) Entgegenhaltungen:
- WO-A1-2010/057656
- DE-A1- 102007 021 172
- DE-U1- 20 306 019

## Beschreibung

Die vorliegende Erfindung betrifft ein Sortierverfahren und ein Verfahren zum Recycling von, bevorzugt grobkeramischen, feuerfesten, geformten Erzeugnissen, vorzugsweise von Steinen, sowie die Verwendung der sortierten bzw. recycelten Erzeugnisse.

Der Begriff "feuerfest" soll im Rahmen der Erfindung nicht begrenzt sein auf die Definition gemäß ISO 836 bzw. DIN 51060, die einen Kegelfallpunkt von > 1500° C definieren. Feuerfeste Erzeugnisse im Sinne der Erfindung haben einen Druckerweichungspunkt T_{0,5} gemäß DIN EN ISO 1893: 2008-09 von T_{0,5} ≥ 600 °C, bevorzugt T_{0,5} ≥ 800 °C. Demnach sind feuerfeste bzw. refraktäre körnige Werkstoffe bzw. Körnungen im Sinne der Erfindung solche Werkstoffe bzw. Körnungen, die für ein feuerfestes Erzeugnis mit dem oben genannten Druckerweichungspunkt T_{0,5} geeignet sind.

Feuerfeste Erzeugnisse werden zum Schutz von Aggregatkonstruktionen in Aggregaten eingesetzt, in denen Temperaturen zwischen 600 und 2000 °C, insbesondere zwischen 800 und 1800° C, vorherrschen.

Insbesondere dienen sie zur feuerfesten Auskleidung (Zustellung) von Anlagen für thermische Prozesse, bevorzugt von Schmelz-, Brenn-, und Wärmebehandlungsanlagen oder von Transportgefäßen. Es kann sich aber auch um Funktionalprodukte handeln (siehe "Gerald Routschka/Hartmut Wuthnow, Praxishandbuch "Feuerfeste Werkstoffe", 6. Auflage, Vulkan-Verlag (im Folgenden lediglich mit "Praxishandbuch" bezeichnet), Kapitel 1.6).

Die feuerfeste Zustellung einer Anlage oder eines Transportgefäßes, welche den Mantel der Anlage oder des Transportgefäßes auskleidet, kann dabei ein- oder mehrschichtig ausgebildet sein, in der Regel ist sie mehrschichtig ausgebildet. Die Zustellung weist ein feuerseitiges bzw. aggregatinnenseitiges Arbeitsfutter bzw. Verschleißfutter auf, welches während des Einsatzes verschleißt und regelmäßig erneuert werden muss. Besteht das Verschleißfutter aus feuerfesten Steinen wird insbesondere deren Feuerseite während des Einsatzes verbraucht. Zumindest ein Teil der Steine kann allerdings nach dem Einsatz wieder verwendet werden und wird dazu aus dem Verschleißfutter mechanisch ausgebrochen.

Zudem kann die Zustellung ein Dauerfutter aufweisen, das sich an das Verschleißfutter anschließt. Das Dauerfutter verbleibt dann für mehrere Ofenreisen bzw. Zyklen in der Anlage bzw. dem Transportgefäß und dient als Sicherheitsfutter. An das Dauerfutter kann sich zudem eine isolierende Hintermauerung anschließen.

Grobkeramische Erzeugnisse sind bekanntermaßen Erzeugnisse, die aus Körnungen mit Korngrößen bis 6 mm, in besonderen Fällen auch bis 25 mm hergestellt werden (Praxishandbuch, Kapitel 2). Grobkeramik wird durch die Korngröße der Gefügebestandteile von der Feinkeramik unterschieden. Sind die Gefügebestandteile zumindest teilweise größer als 1 mm, so liegt ein Grobkeramikprodukt vor, sind die Gefügebestandteile ausschließlich ≤ 1 mm, handelt es sich um Feinkeramik.

Des Weiteren unterscheidet man bei den feuerfesten Erzeugnissen bekanntermaßen zwischen nichtbasischen (Praxishandbuch, 4.1) und basischen Erzeugnissen (Praxishandbuch, 4.2). Gemäß DIN EN ISO 10081:2005-05 wird insbesondere basierend auf dem chemischen Reaktionsverhalten zwischen nicht basischen und basischen feuerfesten Erzeugnissen unterschieden. Die Erzeugnisgruppe der nicht basischen Erzeugnisse umfasst die Werkstoffe der SiO₂-Al₂O₃-Reihe und andere, nach ihrem chemischen Reaktionsverhalten nicht näher eingruppierbare Werkstoffe wie SiC- und Kohlenstoff-Produkte. Wesentliches Merkmal der meisten basischen Erzeugnisse ist es, dass die Summe der Oxide MgO und CaO überwiegt. Außerdem werden Chromit-, Picrochromit-, Spinell- und Forsteritsteine zu den basischen Erzeugnissen gerechnet, obwohl sie nahezu neutral sind.

Bei den grobkeramischen Erzeugnissen wird zudem zwischen geformten und ungeformten Erzeugnissen unterschieden.

Bei geformten grobkeramischen Erzeugnissen handelt es sich um ungebrannte, ggf. getemperte, oder um keramisch gebrannte, vorzugsweise in einer keramischen Fabrik hergestellte, Produkte, insbesondere Steine oder Platten. Sie haben eine definierte Geometrie und sind einbaufertig. Die Formgebung erfolgt z.B. durch Pressen, Stampfen, Rammen oder Schlickergießen. Die geformten Erzeugnisse, insbesondere die Steine, werden z.B. zur Ausbildung der Zustellung, mit Mörtel oder mörtelfrei ("knirsch") vermauert. Der Produktionsprozess von grobkeramischen geformten Erzeugnissen gliedert sich üblicherweise in die folgenden Schritte (Praxishandbuch, Seite 14/Punkt 2.1):
- Aufbereitung
- Mischen
- Formgebung
- Gegebenenfalls Trocknen
- (gegebenenfalls) thermische Behandlung bis 800 °C oder Brennen
- Nachbehandlung (falls erforderlich)

Bei ungeformten Erzeugnissen (Praxishandbuch, Seite 142/Punkt 5) handelt es sich um Erzeugnisse, die, meist beim Anwender, aus einer ungeformten Frischmasse oder aus Batzen, z.B. durch Gießen, Vibrieren, Stochern, Stampfen oder Spritzen, in ihre endgültige Form gebracht werden. Ungeformte Erzeugnisse werden am Verwendungsort meist hinter Schalungen in größeren Feldern eingebracht und bilden nach der Erhärtung einen Teil der Zustellung. Beispielsweise handelt es sich bei den ungeformten Erzeugnissen um Spritzmassen, Stampfmassen, Gießmassen, Vibrationsmassen oder Vergussmassen.

Das Recycling von feuerfesten Erzeugnissen gewinnt aus ökonomischen und ökologischen Gründen und auch wegen der Ressourcenverknappung zunehmend an Bedeutung. Die Wiederverwendung von recycelten Werkstoffen (Rezyklaten) für die Erzeugung von neuen feuerfesten Erzeugnissen bringt die Vorteile kostengünstigerer Ausgangsmaterialien, niedrigerer Verarbeitungskosten, eines geringeren Energieverbrauchs und eines reduzierten Kohlendioxidausstoßes im Vergleich zu Primärrohstoffen mit sich.

Für eine Wiederverwendung der ausgebrochenen Erzeugnisse müssen diese allerdings sortenrein sortiert werden. Denn meistens liegt nach dem Ausbruch der Zustellung eine Mischung aus verschiedenen Erzeugnissorten vor. Auch wurden die Erzeugnisse je nach Einsatzort und -zeit unterschiedlich beansprucht und gegebenenfalls chemisch/mineralisch verändert, so dass nicht alle Erzeugnisse für die Wiederverwendung geeignet sind bzw. zur Herstellung von unterschiedlichen Erzeugnissen geeignet sind. Die ausgebrochenen Erzeugnisse können z.B. durch Infiltration und/oder Anhaftungen von/mit Schlacken, Klinkerschmelzen, Metallen, Salzen oder anderen Prozessmedien verunreinigt sein.

Um eine Trennung der ausgebrochenen Erzeugnisse auf Basis ihrer chemischen/mineralischen Zusammensetzung zu ermöglichen, ist es auf dem Fachgebiet bekannt, eine chemische Analyse der Erzeugnisse mittels Laser-Emissionsspektroskopie (LIBS) durchzuführen (siehe z.B. https://cordis.europa.eu/article/id/197342-how-to-turn-refractory-waste-back-into-raw-materials/de). Mittels einer Multi-Elementanalyse wird eine Klassifizierung unterschiedlicher Feuerfestmaterialien durchgeführt. Insbesondere können die Hauptbestandteile und einige Zuschlagstoffe ermittelt werden.

Allerdings können die feuerfesten Erzeugnisse mit diesem Verfahren nicht immer vollständig chemisch/mineralisch charakterisiert werden. Beispielsweise kann nicht eindeutig bestimmt werden, ob die feuerfesten Erzeugnisse Kohlenstoff enthalten. Dies resultiert daraus, dass sich die feuerfesten Erzeugnisse während ihres Einsatzes oberflächlich verändern. Der Kohlenstoff brennt an der Feuerseite der Erzeugnisse aus. Da die Eindringtiefe bei der LIBS-Messung in der Regel auf einige 100 µm begrenzt ist, kann es deshalb passieren, dass kein Kohlenstoff detektiert wird, obwohl es sich um ein Erzeugnis mit Kohlenstoff handelt.

Des Weiteren ist auf dem Fachgebiet bekannt, feuerfeste Erzeugnisse zu unterschiedlichen Zwecken mit einem Sensor oder einem Chip zu versehen.

Die WO 2008/135135 A2 offenbart beispielsweise ein keramisches Bauteil, das einen integrierten Sensor zur Datenerfassung- und -übertragung aufweist, wobei es sich bei den erfassten Informationen um Identifikation des Bauteils, physikalische Eigenschaften des Bauteils, Bewegungen des Bauteils, Einsatzzeit des Bauteils oder Ort des Bauteils handelt. Aufgabe soll sein, eine Identifizierung und Aussagen über den Zustand bzw. die Einsatzzeit des Bauteils vor, während und nach dem Einsatz zu ermöglichen. Zu den Informationen zur Identifikation des Bauteils zählen beispielsweise der Produkttyp, Werkstoffsorten, Herstellerangaben, Herstellungs-, Liefer-, und Einsatzdatum. Insbesondere sollen beispielsweise anhand von Temperaturmessungen und Messungen von mechanischen Spannungen in Abhängigkeit der Zeit Vorhersagen über den Verschleißzustand des Bauteils getroffen werden, so dass es rechtzeitig, aber auch nicht zu früh ausgetauscht wird. Mit dem Recycling der Bauteile befasst sich die WO 2008/135135 A2 nicht.

Die WO 2020/254134 A1 befasst sich ebenfalls mit der Verwendung von Sensoren, z.B. RFID Chips, in feuerfesten Bauelementen, z. B. Schieberplatten. Dabei geht es um die Überwachung und Nachverfolgung von austauschbaren feuerfesten Bauteilen in einer metallurgischen Anlage.

Die EP 3 119 915 B1 offenbart einen metallurgischen Behälter mit einem drahtlos auslesbaren Transponder.

Die WO 2010/057656 A1 befasst sich mit einer Vorrichtung zur aktiven Verfolgung spezifischer Daten zu Anlagen oder deren Komponenten einer hüttenmännischen Anlage, wobei mit jeder Komponente wenigstens ein beschreib- und auslesbares Speichermedium, z.B. ein RFID Chip, für die spezifischen Daten fest verbunden ist und die spezifischen Daten periodisch und/oder eingabeabhängig veränderbar sind. Unter anderem handelt es sich bei den Daten um physikalische und/oder mechanische und/oder chemische Eigenschaften der Komponenten.

Die DE 203 06 019 U1 offenbart eine Sortiermaschine unter Nutzung von Transpondern wobei aus einem Sortiergutstrom gezielt bestimmte Objekte abgetrennt werden und die für die Sortierung relevanten Informationen mittels Radio-Frequenz-Identifikationssystem gewonnen werden. Dabei werden diejenigen Objekte identifiziert, die mit einem Transponder ausgestattet sind und sich im Erfassungsbereich mindestens eines Lesegerätes befinden. Bei den relevanten Informationen handelt es sich beispielsweise um Informationen zur Materialzusammensetzung und/oder zur Verwendung und/oder zur Herstellung. Mit der Sortiermaschine werden aus gebrauchten Verpackungen wie z. B. Kunststoffflaschen, Kunststoffflaschen aus einem bestimmten Material und Silikonkartuschen aussortiert. Dabei tragen zumindest diejenigen Objekte, die aussortiert werden sollen, einen Transponder.

Aufgabe der vorliegenden Erfindung ist die Bereitstellung eines Sortierverfahrens zum Sortieren von, vorzugsweise grobkeramischen, feuerfesten, vorzugsweise in einem Aggregat, vorzugsweise einem Ofen, eingesetzten und aus diesem nach dem Einsatz ausgebrochenen, geformten Erzeugnissen, vorzugsweise von Steinen, welches eine effiziente und exakte Sortierung der ausgebrochenen Erzeugnisse gewährleistet.

Weitere Aufgaben der vorliegenden Erfindung sind die Bereitstellung eines Verfahrens zum Recycling der ausgebrochenen Erzeugnisse und die Bereitstellung einer Verwendung der ausgebrochenen Erzeugnisse.

Die Aufgabe wird durch ein Sortierverfahren mit den Merkmalen von Anspruch 1, ein Verfahren zum Recycling mit den Merkmalen von Anspruch 11 und eine Verwendung mit den Merkmalen von Anspruch 12 gelöst. Vorteilhafte Weiterbildungen der Erfindung sind in den sich anschließenden Unteransprüchen gekennzeichnet.

Im Folgenden wird die Erfindung anhand einer Zeichnung beispielhaft näher erläutert. Es zeigen:
- Figur 1:: Schematisch den Lebenszyklus von feuerfesten, gebrannten Erzeugnissen mit erfindungsgemäßem Recycling
- Figur 2:: Schematisch den Lebenszyklus von feuerfesten, ungebrannten Erzeugnissen mit erfindungsgemäßem Recycling

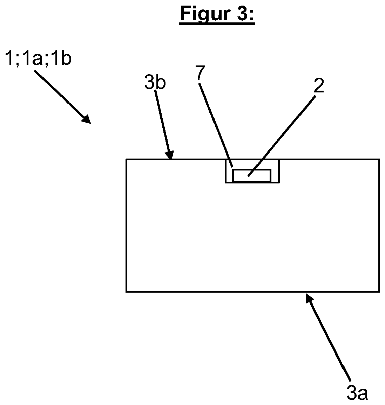

- Figur 3:: Schematisch einen Querschnitt durch einen feuerfesten Stein mit einem integrierten Transponder

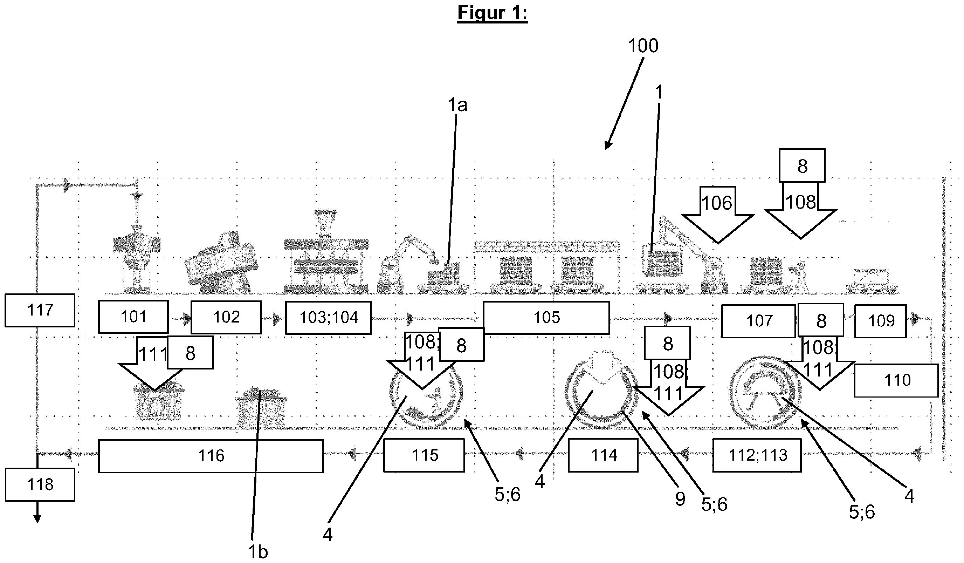

In Figur 1 ist schematisch der Lebenszyklus 100 von feuerfesten, geformten, gebrannten Erzeugnissen 1 dargestellt.

Demnach erfolgt in an sich bekannter Weise zunächst eine Aufbereitung 101 der zur Herstellung verwendeten Rohstoffe. Hierbei handelt es sich um Primärrohstoffe und Sekundärrohstoffe. Anschließend erfolgt ein Mischen 102 der aufbereiteten Rohstoffe und eine Formgebung 103, vorzugsweise ein Pressen 104, der Mischung zu geformten, ungebrannten Erzeugnissen 1a. Dann erfolgt das keramische Brennen 105 der geformten, insbesondere gepressten, ungebrannten Erzeugnisse 1a in einem Ofen.

Erfindungsgemäß erfolgt nach dem Brennen das Versehen bzw. Bestücken 106 der gebrannten Erzeugnisse 1 mit mindestens einem Transponder 2. Anschließend erfolgt vorzugsweise eine Qualitätskontrolle 107 der gebrannten Erzeugnisse 1.

Bei einem Transponder 2 handelt es sich bekanntermaßen um ein Funk-Kommunikationsgerät, das eingehende Signale aufnimmt und automatisch beantwortet bzw. weiterleitet. Ein Transponder 2 kann bekanntermaßen in einem berührungslosen Verfahren Informationen von einer Sende-und/oder Empfangseinheit 8 aufnehmen und/oder an diese übertragen.

Der Transponder 2 weist in an sich bekannter Weise ein Kopplungselement, z.B. eine Antenne und einen Mikrochip auf. Der Mikrochip weist einen analogen Schaltkreis zum Empfangen und Senden (Transceiver) sowie einen digitalen Schaltkreis, bevorzugt einen Mikrocontroller, und einen Speicher auf. Der Speicher ist ein mindestens einmal beschreibbarer Speicher. Der Speicher enthält die unveränderliche, insbesondere einzigartige, Identität des Transponders 2. Vorzugsweise ist es aber ein mehrfach beschreibbarer Speicher, so dass während der Lebensdauer des Transponders 2 immer wieder Informationen abgelegt und/oder verändert werden können.

Bei dem Transponder 2 handelt es sich vorzugsweise um einen passiven Transponder 2.

Bekanntermaßen bezieht ein passiver Transponder 2 die zur Kommunikation und zur Abarbeitung interner Prozesse benötigte Energie ausschließlich aus dem elektromagnetischen Feld der Sende-und/oder Empfangseinheit 8.

Vorzugsweise handelt es sich bei dem Transponder 2 zudem um einen RFID (radio-frequency identification)-Transponder 2.

Außerdem weist der Transponder 2 vorzugsweise Mittel zur Temperaturmessung und/oder Mittel zur Feuchtemessung auf.

Des Weiteren weisen die ungebrannten und gebrannten Erzeugnisse 1;1a eine Erzeugnisfeuerseite bzw. Erzeugnisheißseite 3a und eine dieser gegenüberliegende Erzeugniskaltseite 3b auf. Die Erzeugnisheißseite 3a ist im eingebauten Zustand der Erzeugnisse 1 einem befeuerten Aggregatinneren bzw. Feuerraum 4 eines Aggregats 5, vorzugsweise eines Ofens 6, zugewandt. Die Erzeugniskaltseite 3b ist dem Feuerraum 4 abgewandt.

Vorzugsweise wird der Transponder 2 in einer Aussparung bzw. Vertiefung 7 in der Erzeugniskaltseite 3b des Erzeugnisses 1 angeordnet bzw. positioniert bzw. befestigt. Durch die Anordnung an der Erzeugniskaltseite 3b wird erreicht, dass die Temperaturbelastung auf den Transponder 2 während des Einsatzes möglichst gering ist. Durch die Anordnung des Transponders 2 in der Vertiefung 7 wird zusätzlich ein mechanischer Schutz des Transponders 2 gewährleistet. Insbesondere wird gewährleistet, dass der Transponder 2 während der Handhabung der Erzeugnisse 1 während des Transports und während des Ein- und Ausbaus des Erzeugnisses 1 nicht beschädigt wird.

Erfindungsgemäß erfolgt nun mittels einer an sich bekannten Sende-/Empfangseinheit 8 ein Aufbringen 108 von produktspezifischen Informationen auf den Transponder 2, wobei zumindest Informationen betreffend die chemische und/oder mineralische Zusammensetzung des jeweiligen Erzeugnisses 1 aufgebracht bzw. gespeichert werden. Vorzugsweise handelt es sich bei den produktspezifischen Informationen um die Rezeptur. Die Rezeptur beinhaltet alle zur Herstellung des Erzeugnisses verwendete Materialien, also insbesondere auch die verwendeten Haupt- und Nebenbestandteile, insbesondere die Additive. Vorzugsweise beinhaltet die Rezeptur auch Informationen bezüglich der chemischen Zusammensetzung der verwendeten Materialien, insbesondere den Gehalt an Verunreinigungen, wie z.B. den Eisengehalt. Insbesondere das Vorhandensein und der Anteil der Additive kann bei den bekannten Verfahren zumindest nicht ohne Weiteres ermittelt werden.

Des Weiteren wird vorzugsweise zumindest eine der folgenden Informationen aufgebracht bzw. gespeichert:
- Produktionsdatum
- Interne Rezepturnummer
- Angaben zum Herstellungsprozess, insbesondere die Mischzeit und/oder der Pressdruck und/oder die Brenntemperatur
- Abfallschlüsselnummer
- Eine Palettennummer zur Nachverfolgung

Mittels des Produktionsdatums können zum Beispiel in Kombination mit der Rezepturnummer ebenfalls die zur Herstellung verwendeten Materialien und deren Zusammensetzung ermittelt werden, wenn die zugehörigen Daten in einer Datenbank abgelegt sind. Die vollständige Speicherung der Rezeptur auf dem Transponder 2 ist dann nicht notwendig.

Nach dem Aufbringen 108 der Informationen erfolgt vorzugsweise ein Verpacken 109 der gebrannten Erzeugnisse 1 und ein Transportieren 110 zum Einsatzort.

Nach Ankunft am Einsatzort erfolgt gegebenenfalls ein weiteres Aufbringen 108 von Informationen auf den Transponder 2 und/oder ein Auslesen 111 von Informationen.

Insbesondere können die ausgelesenen Informationen in Warenmanagementsysteme der Betreiber der Anlage übernommen werden.

Anschließend erfolgt die Installation bzw. das Installieren 112 der Erzeugnisse 1 in dem Aggregat 5. Insbesondere erfolgt die feuerfeste Zustellung bzw. feuerfeste Auskleidung 113 des Aggregats 5 mit den feuerfesten Erzeugnissen 1. Die feuerfesten Erzeugnisse 1 werden dabei vorzugsweise entweder zur Herstellung eines Verschleißfutters oder eines Dauerfutters oder einer isolierenden Hintermauerung verwendet. Sie bilden also nach der Installation 112 einen Teil einer Zustellung 9 des Aggregats 5, insbesondere einen Teil des Verschleißfutters oder des Dauerfutters oder der isolierenden Hintermauerung.

Vor oder nach der Installation 112 erfolgt vorzugsweise ein weiteres Aufbringen 108 von Informationen auf den Transponder 2, insbesondere Informationen betreffend den Einsatzort, insbesondere das Aggregat 5 an sich, und vorzugsweise die Zone in dem Aggregat 5, vorzugsweise dem Ofen 6, und/oder die Montagemethode. Betreffend die Montagemethode kann insbesondere die Information aufgebracht werden, ob die Erzeugnisse 1 miteinander vermörtelt werden oder nicht.

Anschließend erfolgt der Einsatz 114 der Erzeugnisse 1 in dem Aggregat 5, vorzugsweise in dem Ofen 6.

Falls die Transponder 2 dazu eingerichtet sind, erfolgt während des Einsatzes, also in-situ, vorzugsweise eine, bevorzugt kontinuierliche, Temperaturmessung und/oder eine Feuchtemessung und/oder eine Atmosphärenmessung durch den jeweiligen Transponder 2. Der Transponder 2 speichert diese Messergebnisse zudem ab.

Nach einer bestimmten Einsatzdauer erfolgt der Ausbruch bzw. das Ausbrechen 115 der Erzeugnisse 1 aus dem Aggregat 5, vorzugsweise dem Ofen 6.

Vorzugsweise erfolgt nach dem Ausbrechen 115 ein weiteres Aufbringen 108 von Informationen auf den Transponder 2 der ausgebrochenen Erzeugnisse 1b, insbesondere Informationen betreffend den Einsatz 114 der Erzeugnisse 1, bevorzugt Informationen über die Einsatzzeit und/oder das Temperaturegime im Anlageninneren bzw. Feuerraum 4 und/oder die Atmosphäre im Anlageninneren bzw. Feuerraum 4, insbesondere den Alkaligehalt der Atmosphäre und/oder das im Aggregat 5, vorzugsweise dem Ofen 6, hergestellte oder verarbeitete Material und/oder die dazu verwendeten Rohstoffe.

Denn mittels der Informationen über den Einsatz der Erzeugnisse 1 können ebenfalls Voraussagen über die mineralische und/oder chemischer Zusammensetzung der ausgebrochenen Erzeugnisse 1b gemacht werden, falls diese derart beansprucht werden, dass sie sich während des Einsatzes verändern.

Anschließend erfolgt das Sortieren 116 der ausgebrochenen Erzeugnisse 1b. Das Sortieren 116 erfolgt erfindungsgemäß unter anderem anhand der auf dem Transponder 2 enthaltenen Informationen betreffend die mineralische und/oder chemische Zusammensetzung der Erzeugnisse 1b. Hierzu erfolgt vor dem Sortieren 116 das Auslesen 111 der Informationen von dem Transponder 2.

Die ausgelesenen Informationen werden mittels eines Datenverarbeitungsprogramms bzw. von einer Datenverarbeitungsanlage und/oder von einer Bedienperson verarbeitet und zum Sortieren verwendet.

Insbesondere erfolgt bei der Sortierung 116 eine Zuordnung der Erzeugnisse 1b in verschiedene Materialfraktionen. Je nachdem, ob die Materialfraktionen wiederverwendbar sind oder nicht, erfolgt entweder eine Rückführung 117 und Wiederverwendung der Erzeugnisse 1b oder eine gesetzmäßige Entsorgung 118.

Für die Wiederverwendung werden die wiederverwendbaren Erzeugnisse 1b erneut dem Herstellungsprozess für die Herstellung von neuen feuerfesten Erzeugnissen 1 zugeführt, insbesondere aufbereitet.

Dabei können die wiederverwendbaren Erzeugnisse 1b entweder für die Herstellung von Erzeugnissen 1 derselben Erzeugnissorte oder anderen feuerfesten Erzeugnissen verwendet werden. Beispielsweise können sie auch zur Herstellung von ungeformten feuerfesten Erzeugnissen verwendet werden (nicht dargestellt).

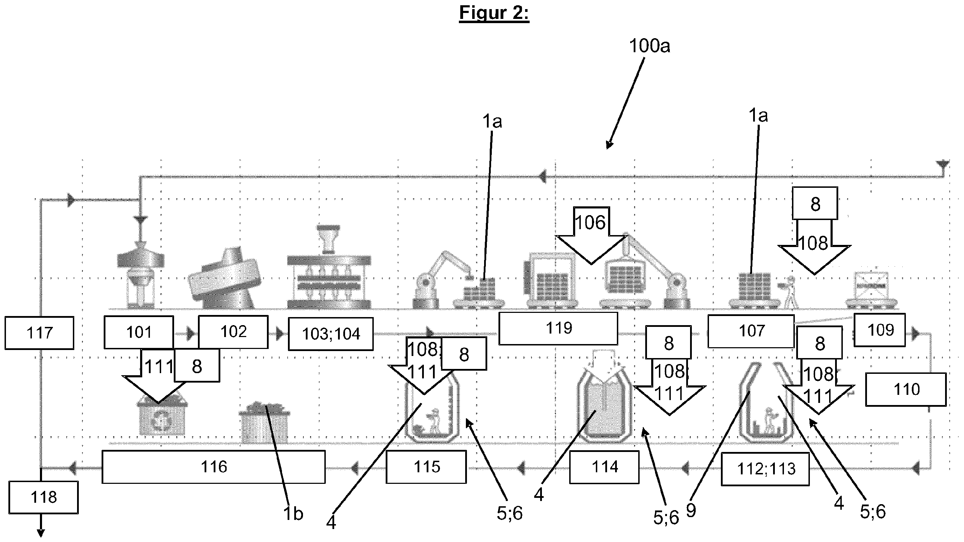

Figur 2 zeigt einen Lebenszyklus 100a von ungebrannten, geformten, feuerfesten Erzeugnissen 1a.

Im Unterschied zu den gebrannten Erzeugnissen 1 erfolgt anstelle des Brennens 105 lediglich vorzugsweise eine Wärmebehandlung 119 bei bis zu höchstens 800°C. Die ungebrannten Erzeugnisse 1a werden dann beim Einsatz 114 in an sich bekannter Weise in situ gebrannt.

Insbesondere bei den ungebrannten Erzeugnissen 1a sind Informationen über den Einsatz für die Sortierung vorteilhaft, da diese sich in der Regel im Einsatz chemisch und/oder mineralisch verändern.

Des Weiteren werden erfindungsgemäß auch gebrannte oder ungebrannte Erzeugnisse 1;1a sortiert, die nicht in einem Aggregat 5 eingesetzt wurden aber dennoch recycliert werden müssen.

Insbesondere müssen Erzeugnisse 1;1a recycliert werden, wenn sie ihre Haltbarkeitszeit überschritten haben oder aus anderen Gründen während der Lagerung oder des Transports so verändert wurden, dass sie nicht mehr eingesetzt werden können, also unbrauchbar sind. Beispielsweise kann es vorkommen, dass Magnesiasteine bei Lagerung oder Transport zu lange zu hoher Luftfeuchtigkeit ausgesetzt werden, deshalb hydratisieren und aufgrunddessen nicht mehr verwendet werden können.

Dies kann beispielsweise durch Auslesen des Transponders 2 festgestellt werden, wenn dieser Mittel zur Feuchtemessung aufweist.

Außerdem müssen der bei der Herstellung der Erzeugnisse 1;1a anfallender Ausschuss oder im Rahmen einer Überproduktion anfallende Erzeugnisse 1;1a recycliert werden.

Das erfindungsgemäße Verfahren gewährleistet aufgrund der Sortierung 116 auf Basis der auf dem Transponder 2 enthaltenen Informationen bzw. der von diesem ausgelesenen Information(en) eine sortenreine, effiziente und sichere Sortierung 116. Es ist keine fehlerbehaftete und aufwändige laseroptische Bestimmung der chemischen und/oder mineralogischen Zusammensetzung der Erzeugnisse 1;1a;1b und/oder eine manuelle Sortierung notwendig. Auch kann eine viel feinere bzw. detailliertere Sortierung 116 erfolgen. Denn der Transponder 2 kann nicht nur Informationen betreffend die Hauptbestandteile, sondern auch die Nebenbestandteile, z.B. auch zum Bindemittel und zu Additive, enthalten, so dass auch darauf basierend sortiert werden kann. Dadurch kann also die Qualität der Recyclate noch weiter verbessert werden.

Das erfindungsgemäße Verfahren ermöglicht es auch, die Erzeugnisse 1;1a;1b nicht nur nach der chemischen und/oder mineralogischen Zusammensetzung zu klassifizieren, sondern z.B. auch nach der Rohstoffherkunft und/oder nach dem Einfluss des Einsatzes auf das Erzeugnis.

Anders als z.B. Barcodes können zudem die Transponder 2, bevorzugt die RFID Transponder, auch dann ausgelesen werden, wenn optische Verfahren nicht angewendet werden können. Außerdem können wie beschrieben Informationen aus nacheinander ablaufenden Prozesse in mehreren Schritten aufgenommen und abgegeben werden. Vorzugsweise werden sogar wie erläutert in-situ Daten aufgezeichnet, welche bei der Sortierung 116 heran gezogen werden können.

Im Rahmen der Erfindung liegt es dabei selbstverständlich auch, dass die Transponder 2 bereits, insbesondere produktspezifische, Informationen enthalten, bevor sie an dem feuerfesten Erzeugnis 1;1a angebracht werden. Auch können die Informationen bereits vor der Qualitätskontrolle 107 auf den Transponder 2 aufgebracht werden. Es kommt nur darauf an, dass sie vor dem Installieren 112 der Erzeugnisse 1;1a auf dem Transponder 2 vorhanden sind.

Es ist zudem auch möglich, dass die Transponder 2 lediglich eine Kennzeichnung zur eindeutigen Identifizierung des Erzeugnisses 1;1a ohne weitere produktspezifische Informationen enthalten. Die Sortierkriterien, anhand derer sortiert wird, sind dann nicht direkt auslesbar.

Die Zuordnung der Kennzeichnung zu den Produkteigenschaften, insbesondere der Rezeptur, erfolgt dann erst nach dem Auslesen des Transponders 2 durch Datenverarbeitung. In diesem Fall sind beispielsweise in einer Datenbank alle notwendigen produktspezifische Informationen, insbesondere die Rezeptur, zu dem jeweiligen Erzeugnis 1;1a abgelegt.

Dies gilt auch für alle anderen Informationen. Grundsätzlich müssen die zur Sortierung verwendeten Sortierkriterien nicht direkt vom Transponder 2 auslesbar sein. Es kann vielmehr auf dem Transponder 2 jeweils eine Information abgelegt sein, die ausgelesen wird und in einer Datenbank sind die der Information zugeordneten Sortierkriterien und gegebenenfalls weitere Informationen gespeichert. Wie bereits erläutert, kann es sich bei der auf dem Transponder 2 gespeicherten Information zum Beispiel um die Rezeptnummer oder eine andere Information zur eindeutigen Identifizierung des Erzeugnisses 1;1a handeln.

In diesem Fall kann es sich insbesondere bei dem Transponder 2 auch um einen einfacheren Transponder 2 lediglich mit Mikroprozessor ohne wiederbeschreibbarem Speicher oder einen SAW (surface accoustic waves)-Transponder handeln.

Abschließend wird darauf hingewiesen, dass alle genannten, insbesondere beanspruchten, Merkmale des Sortierverfahrens und/oder des Recyclingverfahrens für sich genommen und in jeglicher Kombination besonders vorteilhaft und Gegenstand der vorliegenden Erfindung sind.

Insbesondere sind auch alle genannten vom Transponder ausgelesenen Informationen und/oder alle zur Verarbeitung der vom Transponder ausgelesenen Informationen verwendeten Informationen in jeglicher Kombination miteinander kombinierbar.

## Patentansprüche

1. Sortierverfahren zum Sortieren (116) von, vorzugsweise grobkeramischen, feuerfesten, geformten Erzeugnissen (1;1a;1b), vorzugsweise von Steinen, wobei die Erzeugnisse (1;1a;1b) zumindest auf Basis ihrer mineralischen und/oder chemischen Zusammensetzung sortiert werden,
wobei die Erzeugnisse (1;1a;1b) einen Transponder (2) aufweisen, der zum Sortieren ausgelesen wird und die Erzeugnisse (1;1a;1b) anhand bzw. durch Verarbeitung der ausgelesenen Informationen mindestens bezüglich ihrer mineralischen und/oder chemischen Zusammensetzung sortiert werden,
und wobei es sich bei den Erzeugnissen (1;1a;1b)
a) zumindest teilweise um in einem Aggregat (5), vorzugsweise einem Ofen (6) oder einem Transportgefäß, eingesetzte und aus diesem nach dem Einsatz ausgebrochene Erzeugnisse (1b),
und/oder
b) zumindest teilweise um für den Einsatz unbrauchbare Erzeugnisse (1;1a), insbesondere um bei der Herstellung anfallende Ausschusserzeugnisse und/oder um sich während der Lagerung und/oder dem Transport veränderte, bevorzugt hydratisierte, Erzeugnisse (1;1a),
handelt.

2. Sortierverfahren nach Anspruch 1,
**dadurch gekennzeichnet, dass**
die Sortierkriterien, anhand derer die Erzeugnisse (1;1a;1b) sortiert werden, direkt vom Transponder (2) ausgelesen werden und/oder mittels Datenverarbeitung aus den vom Transponder (2) ausgelesenen Informationen ermittelt werden.

3. Sortierverfahren nach Anspruch 1 oder 2,
**dadurch gekennzeichnet, dass**
der Transponder (2) Informationen bezüglich der mineralischen und/oder chemischen Zusammensetzung des Erzeugnisses (1;1a;1b) aufweist und die Erzeugnisse (1;1a;1b) mindestens anhand dieser Informationen sortiert werden.

4. Sortierverfahren nach Anspruch 1 oder 2,
**dadurch gekennzeichnet, dass**
es sich bei den vom Transponder (2) ausgelesenen Informationen und/oder den zur Verarbeitung der vom Transponder (2) ausgelesenen Informationen verwendeten Informationen um eine oder mehrere der folgenden Informationen handelt:
- Rezeptur
- Produktionsdatum
- interne Rezepturnummer
- Angaben zum Herstellungsprozess der Erzeugnisse (1;1a), insbesondere die Mischzeit und/oder der Pressdruck und/oder die Brenntemperatur
- Abfallschlüsselnummer
- Einsatzort der Erzeugnisse (1;1a)
- Einsatzzeit der Erzeugnisse (1;1a)
- Temperaturegime in einem Anlageninneren (4) eines Aggregats (5), vorzugsweise eines Ofens (6), in dem die Erzeugnisse (1;1a) eingesetzt waren
- Atmosphäre im Anlageninneren (4) des Aggregats (5), vorzugsweise des Ofens (6), in dem die Erzeugnisse (1;1a) eingesetzt waren, insbesondere Alkaligehalt der Atmosphäre
- Palettennummer.

5. Sortierverfahren nach einem der vorhergehenden Ansprüche,
**dadurch gekennzeichnet, dass**
die Erzeugnisse (1;1a;1b) als Transponder (2) einen RFID-Transponder aufweisen.

6. Sortierverfahren nach einem der vorhergehenden Ansprüche,
**dadurch gekennzeichnet, dass**
die Erzeugnisse (1;1a;1b) einen passiven Transponder (2) aufweisen.

7. Sortierverfahren nach einem der vorhergehenden Ansprüche,
**dadurch gekennzeichnet, dass**
der Transponder (2) Mittel zur Temperaturmessung und/oder Mittel zur Feuchtemessung und/oder Mittel zur Atmosphärenmessung aufweist.

8. Sortierverfahren nach einem der vorhergehenden Ansprüche,
**dadurch gekennzeichnet, dass**
die Transponder (2) jeweils in einer Aussparung (7) in einer Erzeugniskaltseite (3b) des ausgebrochenen Erzeugnisses (1b) angeordnet ist.

9. Sortierverfahren nach einem der vorhergehenden Ansprüche,
**dadurch gekennzeichnet, dass**
es sich bei den ausgebrochenen Erzeugnissen (1b) um Erzeugnisse (1b) einer feuerfesten Zustellung und/oder um Funktionalprodukte handelt.

10. Sortierverfahren nach einem der vorhergehenden Ansprüche,
**dadurch gekennzeichnet, dass**
es sich bei den Erzeugnissen (1;1a)teilweise um Erzeugnisse (1;1a) aus Überproduktion handelt.

11. Verfahren zum Recycling von grobkeramischen, feuerfesten, in einem Aggregat (5), vorzugsweise einem Ofen (6) oder einem Transportgefäß, eingesetzten, vorzugsweise grobkeramischen, geformten Erzeugnissen (1;1a), vorzugsweise von Steinen, mit folgenden Verfahrensschritten:
a) Ausbrechen der Erzeugnisse (1;1a) aus dem Aggregat (5), vorzugsweise dem Ofen (6),
b) Sortieren der ausgebrochenen Erzeugnisse (1b) zumindest auf Basis ihrer mineralischen und/oder chemischen Zusammensetzung,
c) Vorzugsweise Aufbereiten der sortierten Erzeugnisse (1b),
wobei die ausgebrochenen Erzeugnisse (1b) einen Transponder (2) aufweisen und gemäß dem Sortierverfahren gemäß einem der vorhergehenden Ansprüche sortiert werden.

12. Wiederverwendung von gemäß dem Sortierverfahren gemäß einem der Ansprüche 1 bis 10 sortierten Erzeugnissen (1;1a;1b) oder von gemäß dem Verfahren gemäß Anspruch 11 recycelten Erzeugnissen (1b) zur Herstellung von, bevorzugt grobkeramischen, feuerfesten, geformten oder ungeformten Erzeugnissen.

## Claims

1. Sorting method for sorting (116), preferably coarse ceramic, refractory, shaped products (1;1a;1b), preferably bricks, wherein the products (1;1a;1b) are sorted at least on the basis of their mineral and/or chemical composition,
wherein the products (1;1a;1b) comprise a transponder (2) which is read out for sorting and the products (1;1a;1b) are sorted at least with regard to their mineral and/or chemical composition on the basis of or by processing the read-out information,
and wherein the products (1;1a;1b) are
a) at least partially products (1b) used in an aggregate (5), preferably a furnace (6) or a transport vessel, and broken out of this after use,
and/or
b) at least partially products (1;1a) that are unusable for use, in particular waste products (1;1a) that incur during manufacture and/or products (1;1a) that have changed, preferably hydrated, during storage and/or transport.

2. Sorting method according to claim 1,
**characterized in that**
the sorting criteria on the basis of which the products (1;1a; 1b) are sorted are read directly from the transponder (2) and/or are determined by means of data processing from the information read from the transponder (2).

3. Sorting method according to claim 1 or 2,
**characterized in that**
the transponder (2) comprises information relating to the mineral and/or chemical composition of the product (1;1a;1b) and the products (1;1a;1b) are sorted at least on the basis of this information.

4. Sorting method according to claim 1 or 2,
**characterized in that**
the information read from the transponder (2) and/or the information used to process the information read from the transponder (2) is one or more of the following:
- Recipe
- Production date
- Internal recipe number
- Information on the manufacturing process of the products (1;1a), in particular the mixing time and/or the pressing pressure and/or the firing temperature
- Waste code number
- Place of use of the products (1;1a)
- Operating time of the products (1;1a)
- Temperature regime in a plant interior (4) of an aggregate (5), preferably a furnace (6), in which the products (1;1a) were used
- Atmosphere in the plant interior (4) of the aggregate (5), preferably of the furnace (6), in which the products (1;1a) were used, in particular alkali content of the atmosphere
- Pallet number.

5. Sorting method according to one of the preceding claims,
**characterized in that**
the products (1;1a;1b) comprise an RFID transponder as transponder (2).

6. Sorting method according to one of the preceding claims,
**characterized in that**
the products (1;1a;1b) comprise a passive transponder (2).

7. Sorting method according to one of the preceding claims,
**characterized in that**
the transponder (2) comprises means for temperature measurement and/or means for humidity measurement and/or means for atmospheric measurement.

8. Sorting method according to one of the preceding claims,
**characterized in that**
the transponders (2) are each arranged in a recess (7) in a product cold side (3b) of the broken-out product (1b).

9. Sorting method according to one of the preceding claims,
**characterized in that**
the broken-out products (1b) are products (1b) of a refractory lining and/or functional products.

10. Sorting method according to one of the preceding claims,
**characterized in that**
some of the products (1;1a) are products (1;1a) from overproduction.

11. Method for recycling coarse ceramic refractory shaped products (1;1a), preferably bricks, used in an aggregate (5), preferably a furnace (6) or a transport vessel, comprising the following method steps:
a) Breaking out the products (1;1a) of the aggregate (5), preferably the furnace (6),
b) Sorting the broken-out products (1b) at least on the basis of their mineral and/or chemical composition,
c) Preferably reprocessing the sorted products (1b),
wherein the broken-out products (1b) comprise a transponder (2) and are sorted according to the sorting method according to one of the preceding claims.

12. Reuse of products (1;1a;1b) sorted according to the sorting method according to any one of claims 1 to 10 or of products (1b) recycled according to the method according to claim 11 for the production of, preferably, coarse ceramic, refractory, shaped or unshaped products.

## Revendications

1. Procédé de tri pour trier (116) des produits moulés réfractaires (1;1a;1b), de préférence en céramique grossière, de préférence des briques, dans lequel les produits (1;1a;1b) sont triés au moins sur la base de leur composition minérale et/ou chimique,
les produits (1;1a;1b) présentant un transpondeur (2) qui est lu pour le tri et les produits (1;1a;1b) étant triés à l'aide ou par traitement des informations lues au moins en ce qui concerne leur composition minérale et/ou chimique,
et où les produits (1;1a;1b) sont
a) au moins partiellement des produits (1b) placés dans un agrégat (5), de préférence un four (6) ou un récipient de transport, et qui en sont extraits après leur utilisation,
et/ou
b) au moins partiellement des produits (1;1a) inutilisables pour l'emploi, en particulier des produits de rebut obtenus lors de la fabrication et/ou des produits (1;1a) modifiés, de préférence hydratés, pendant le stockage et/ou le transport.

2. Procédé de tri selon la revendication 1,
**caractérisé en ce que**
les critères de tri, à l'aide desquels les produits (1;1a;1b) sont triés, sont lus directement par le transpondeur (2) et/ou sont déterminés au moyen d'un traitement de données à partir des informations lues par le transpondeur (2).

3. Procédé de tri selon la revendication 1 ou 2,
**caractérisé en ce que**
le transpondeur (2) présente des informations concernant la composition minérale et/ou chimique du produit (1;1a;1b) et les produits (1;1a;1b) sont triés au moins sur la base de ces informations.

4. Procédé de tri selon la revendication 1 ou 2,
**caractérisé en ce que**
il s'agit, pour les informations lues par le transpondeur (2) et/ou les informations utilisées pour traiter les informations lues par le transpondeur (2), d'une ou de plusieurs des informations suivantes:
- Recette
- Date de production
- Numéro de recette interne
- Des indications sur le processus de fabrication des produits (1;1a), en particulier le temps de mélange et/ou la pression de pressage et/ou la température de cuisson
- Numéro de code des déchets
- Lieu d'utilisation des produits (1;1a)
- Temps d'utilisation des produits (1;1a)
- Régime de température à l'intérieur d'une installation (4) d'un agrégat (5), de préférence d'un four (6), dans lequel les produits (1;1a) ont été utilisés
- Atmosphère à l'intérieur de l'installation (4) de l'agrégat (5), de préférence du four (6), dans lequel les produits (1;1a) ont été utilisés, en particulier teneur en alcali de l'atmosphère
- Numéro de palette.

5. Procédé de tri selon l'une quelconque des revendications précédentes,
**caractérisé en ce que**
les produits (1;1a;1b) présentent comme transpondeur (2) un transpondeur RFID.

6. Procédé de tri selon l'une quelconque des revendications précédentes,
**caractérisé en ce que**
les produits (1;1a;1b) présentent un transpondeur passif (2).

7. Procédé de tri selon l'une quelconque des revendications précédentes,
**caractérisé en ce que**
le transpondeur (2) présente des moyens de mesure de la température et/ou des moyens de mesure de l'humidité et/ou des moyens de mesure de l'atmosphère.

8. Procédé de tri selon l'une quelconque des revendications précédentes,
**caractérisé en ce que**
les transpondeurs (2) sont disposés chacun dans un évidement (7) dans un côté froid de produit (3b) du produit (1b) extrait.

9. Procédé de tri selon l'une quelconque des revendications précédentes,
**caractérisé en ce que**
les produits extraits (1b) sont des produits (1b) d'un revêtement réfractaire et/ou des produits fonctionnels.

10. Procédé de tri selon l'une quelconque des revendications précédentes,
**caractérisé en ce que**
les produits (1;1a) sont en partie des produits (1;1a) de surproduction.

11. Procédé de recyclage de produits (1;1a) moulés, de préférence en céramique grossière, réfractaires, de préférence de briques, utilisés dans un agrégat (5), de préférence dans un four (6) ou dans un récipient de transport, , présentant les étapes de procédé suivantes:
a) l'extraction des produits (1;1a) de l'agrégat (5), de préférence du four (6),
b) trier les produits extraits (1b) au moins sur la base de leur composition minérale et/ou chimique,
c) De préférence, retraitement des produits triés (1b),
**caractérisé en ce que**
les produits extraits (1b) présentent un transpondeur (2) et sont triés selon le procédé de tri selon l'une des revendications précédentes.

12. Réutilisation des produits triés selon le procédé de tri selon l'une quelconque des revendications 1 à 10 ou des produits (1b) recyclés selon le procédé selon la revendication 11 pour la fabrication de produits, de préférence en céramique grossière, réfractaires, moulés ou non moulés.
